# EUROPÄISCHE PATENTSCHRIFT

(11) **EP 2 208 451 B1**
(45) Veröffentlichungstag und Bekanntmachung des Hinweises auf die Patenterteilung: **03.08.2011**
(21) Anmeldenummer: 10150477.7
(22) Anmeldetag: 12.01.2010
(51) Int. Cl.: A47J 31/54, H05B 6/02

(54) **Vorrichtung zum Erhitzen von fließendem Wasser**
Device for heating flowing water
Dispositif de chauffage d'eau en écoulement

(30) Priorität: 19.01.2009 DE 102009005117
(43) Veröffentlichungstag der Anmeldung: 21.07.2010
(73) Patentinhaber: Ritter Elektronik GmbH, 42897 Remscheid (DE)
(72) Erfinder: Baader, Uwe, 42111, Wuppertal (DE)
(74) Vertreter: Kahlhöfer, Hermann

(56) Entgegenhaltungen:
- EP-A1- 0 387 125
- FR-A1- 2 654 888
- GB-A- 2 128 860
- GB-A- 2 260 604
- US-A1- 2006 231 549

## Beschreibung

Die Erfindung betrifft eine Vorrichtung zum Erhitzen von fließendem Wasser, insbesondere in Kaffeeautomaten gemäß dem Oberbegriff des Anspruchs 1.

Eine gattungsgemäße Vorrichtung zum Erhitzen von fließendem Wasser ist aus der WO 00/07486 bekannt.

Um kleine Wassermengen zur Aufbereitung eines Getränkes zu erwärmen, sind im Stand der Technik grundsätzlich zwei verschiedene Verfahren bekannt. Bei einem ersten Verfahren wird ein bestimmtes Volumen in einem Boiler erhitzt und vorgehalten. Derartige Vorrichtungen erfordern jedoch aufgrund der kontinuierlichen Beheizung des Boilers unnötig viel Energie. Zudem bieten derartige Vorrichtungen nur eine geringe Flexibilität bei Veränderung von Temperaturen, wie beispielsweise bei Mischgetränken aus Milch und Kaffee erforderlich ist.

Demgegenüber ist im Stand der Technik ein weiteres Verfahren bekannt, bei welcher eine kleine Mengen fließenden Wassers nach dem Durchflusserhitzerprinzip erhitzt wird. Eine derartige Vorrichtung ist beispielsweise aus der WO 00/07486 bekannt, von welcher die Erfindung ausgeht. Die Wassermenge wird in diesem Fall durch ein Wasserrohr geleitet, das als eine Sekundärwicklung eines Transformators ausgebildet ist. Hierzu weist der Transformator einen Transformatorkern auf, der eine Primärwicklung trägt und an welchem das Wasserrohr in mehreren Umschlingungen gehalten ist. Die Erwärmung des Wasserrohres erfolgt hierbei durch eine Stromwärme. Das Wasserrohr ist hierzu als Stromleiter ausgebildet, bei welchem eine gewünschte Verlustleistung durch einen geeigneten hohen Strom erzeugt wird. Die Erzeugung des Stromes in dem Wasserrohr erfolgt nach dem transformatorischen Prinzip, wobei die Primärspule des Transformators mit einer Energiequelle koppelbar ist. Somit erfolgt die Erhitzung des Wassers ohne zusätzliche Heizelemente unmittelbar durch Bestromung des Wasserrohres.

Bei der bekannten Vorrichtung ist das Wasserrohr wendelförmig geformt, um eine Mehrzahl an Windungen an dem Transformatorkern zu realisieren. Derartige Wasserrohre sind jedoch in ihrer Herstellung sehr aufwändig. Zudem ist nicht auszuschließen, dass Restmengen von Wasser in den Windungen verbleibt und zu Verkalkungen führt.

Aus der FR 2 654 888 A1 ist die Beschaltung einer Vorrichtung zum Erhitzen von fließendem Wasser bekannt, wobei ein U-förmiges Rohr als Sekundärwicklung gezeigt ist.

Es ist daher Aufgabe der Erfindung, eine Vorrichtung zum Erhitzen eines flieβenden Wassers insbesondere in Kaffeeautomaten der eingangs genannten Gattung bereitzustellen, bei welcher eine einfache Montage und Demontage des Wasserrohres möglich ist.

Ein weiteres Ziel der Erfindung liegt darin, eine möglichst kompakte Vorrichtung zu schaffen, die auch für Kleingeräte einsetzbar ist.

Diese Aufgabe wird erfindungsgemäß dadurch gelöst, dass das Wasserrohr eine U-Form mit zwei im Wesentlichen parallelen Schenkeln aufweist und über eine Einsteckverbindung mit dem Transformatorkern verbunden ist.

Vorteilhafte Weiterbildungen der Erfindung sind durch die Merkmale und Merkmalskombinationen der jeweiligen Unteransprüche definiert.

Die Erfindung besitzt den besonderen Vorteil, dass das Wasser innerhalb einer relativ kurzen Heizstrecke des Heizrohres erhitzt wird. Somit lässt sich das Wasserrohr mit einer Umwindung an dem Transformatorkern des Transformators anordnen. Die Einsteckverbindung zwischen den Wasserrohr und dem Transformatorkern ermöglich zudem ein problemloses Auswechseln vom Wasserrohr. Um über den gesamten Umfang des Wasserrohres eine intensive Bestromung und damit eine Erwärmung der Rohrwandung zu erhalten, ist der Transformatorkern zumindest mit einer Öffnung ausgebildet, durch welche das Wasserrohr mit einem seiner Schenkel einsteckbar ist. Hierbei können die üblichen Formen von Transformatorkernen Anwendung finden.

Die sogenannten EI-Kerne werden hierbei bevorzugt verwendet, so dass der Transformatorkern zwei nebeneinander liegende Öffnungen aufweist, in welchem die Schenkel des Wasserrohres gehalten sind.

Der Transformatorkern kann hierbei durch Ferrit-Kerne aufgebaut sein.

Um möglichst hohe Wirkungsgrade bei der Energieübertragung durch den Transformator zu erhalten, ist die Weitebildung der Erfindung bevorzugt ausgeführt, bei welcher der Transformatorkern ringförmig ausgebildet ist und wobei an jedem der Schenkel des Wasserrohres jeweils ein Ringkern mit einer Primärwicklung angeordnet ist. Die Primärwicklungen sind elektrisch miteinander verbunden, so dass beide Ringkerntransformatoren gemeinsam als ein Transformator betrieben werden können.

Die Ringkerne sind vorzugsweise identisch aufgebaut, wobei die Windungen der Primärwicklungen jeweils gleichmäßig über den Umfang der Ringkerne verteilt sind und im innern der Ringkerne jeweils eine Einstecköffnung für die Schenkel des Wasserrohres bilden.

Zur Stromübertragung ist das U-förmige Wasserrohr mit einer niederohmigen Strombrücke kurzgeschlossen. Die Strombrücke ist gemäß einer vorteilhaften Weiterbildung der Erfindung bevorzugt zwischen den aus dem Transformatorkern aus dem Transformatorkern herausragenden Abschnitte der Schenkel des Wasserrohres vorteilhaft als Heizstrecke zur Erhitzung des Wassers nutzen.

Um die Gerätegröße klein zu halten, ist die Weiterbildung der Erfindung besonders vorteilhaft, bei welcher ein Hochfrequenzwandler zwischen der Energiequelle und der Primärwicklung geschaltet ist, wobei die Energiequelle durch eine Netzeinspeisung gebildet ist. So lässt sich aus der Netzeinspeisung von vorzugsweise 50 Hz oder 60 Hz eine Betriebsspannung im Bereich von 10 kHz bis 40 kHz erzeugen, mit der dann die Primärwicklung des Transformators versorgt wird. Das Übersetzungsverhältnis des Transformators ist dabei so gewählt, dass die im Wesentlichen ohmsche Lastimpedanz des Wasserrohres derart transformiert wird, dass aus der Netzeinspeisung die gewünschte Leistung übernommen wird. So sind Leistungen im Bereich von 1 kW bis 3 kW bei 230 Volt ausführbar.

Bei dem Einsatz von Hochfrequenzwandlern ist bekannt, dass beispielsweise Transistoren und Gleichrichter aufgrund ihrer Verluste Wärme erzeugen. Insoweit ist die Weiterbildung der Erfindung bevorzugt verwendet, bei welcher zumindest eine Teilkomponente des Hochfrequenzwandlers im Bereich des Wasserzulaufs in wärmeleitenden Kontakt zum Wasserrohr angeordnet ist. Damit kann die Abwärme des Hochfrequenzwandlers genutzt werden, um das zugeführte Frischwasser vorzuwärmen.

Für den Einsatz der erfindungsgemäßen Vorrichtung in Mischgetränkeautomaten ist insbesondere die Weiterbildung der Erfindung geeignet, bei welcher eine Regeleinrichtung zur Leistungssteuerung des Hochfrequenzwandlers vorgesehen ist, die mit einem Temperatursensor zur Erfassung einer Wassertemperatur verbunden ist. Damit lässt sich die Wassermenge je nach Anwendungsfall auf unterschiedliche Temperaturen erhitzen. Zudem lässt sich die Temperatur durch Leistungsverstellung des Hochfrequenzwandlers in einfacher Weise regeln. Der Temperatursensor wird hierbei vorteilhaft im Bereich des Wasserauslaufs am Wasserrohr angeordnet.

Die erfindungsgemäße Vorrichtung ist somit geeignet, um in jeder Art von Getränkeautomaten eine Wasseraufbereitung auszuführen. Diese lässt sich aufgrund der direkten Beheizung des Wassers ohne Wärmeabgabe an die Umgebung mit hohen Wirkungsgraden realisieren.

Die erfindungsgemäße Vorrichtung wird nun nachfolgend anhand einiger Ausführungsbeispiele unter Bezug der beigefügten Figuren näher erläutert.

Es stellen dar:
- Fig. 1: schematisch eine Ansicht eines ersten Ausführungsbeispiels der erfin- dungsgemäßen Vorrichtung
- Fig. 2: schematisch eine Querschnittsansicht des Ausführungsbeispiels aus Fig. 1
- Fig. 3: schematisch eine Ansicht eines weiteren Ausführungsbeispiels der erfin- dungsgemäßen Vorrichtung
- Fig. 4: schematisch eine Querschnittsansicht des Ausführungsbeispiels aus Fig. 3

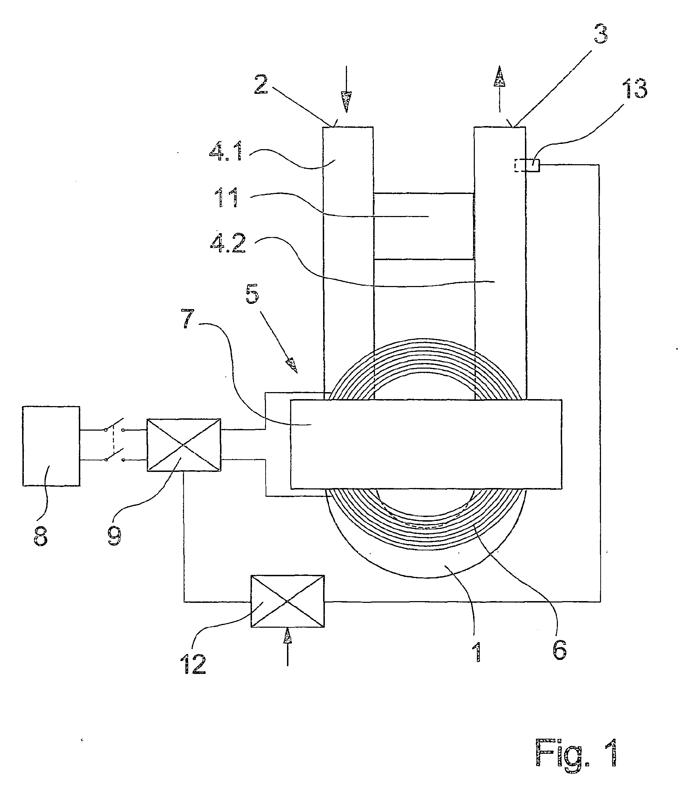

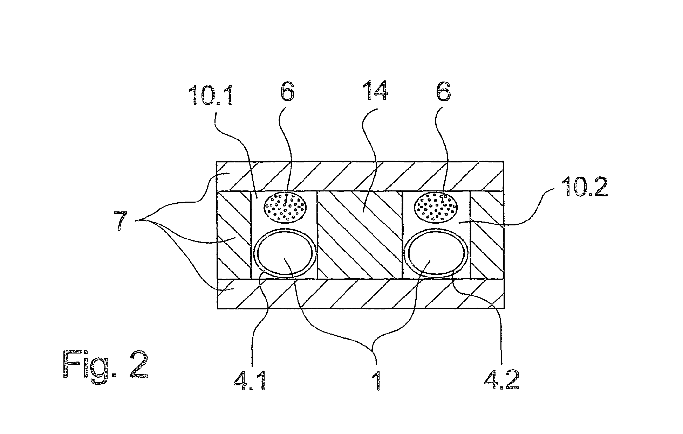

In den Fig. 1 und 2 ist ein erstes Ausführungsbeispiel der erfindungsgemäßen Vorrichtung schematisch in mehreren Ansichten dargestellt. In Fig. 1 ist eine Komplettansicht des Ausführungsbeispiels und in Fig. 2 eine Querschnittsansicht gezeigt. Insoweit kein ausdrücklicher Bezug zu einer der Figuren gemacht ist, gilt die nachfolgende Beschreibung für beide Figuren.

Das Ausführungsbeispiel weist ein gebogenes Wasserrohr 1 auf, das in eine U-Form mit zwei parallelen Schenkeln 4.1 und 4.2 geformt ist. Das Wasserrohr 1 ist hohlzylindrisch ausgebildet und weist am freien Ende des Schenkels 4.1 einen Wasserzulauf 2 und am freien Schenkel 4.2 einen Wasserauslauf 3 auf. Bei Einsatz in Getränkeautomaten könnte somit der Schenkel 4.1 unmittelbar mit einem Wasserspeicher oder einer Frischwasserzuführung verbunden sein. Der Wasserauslauf 3 am Schenkel 4.2 könnte mit einer Dosiereinrichtung zur Abgabe einer definierten Wassermenge verbunden sein.

Das Wasserrohr ist aus einem elektrisch leitfähigen Material beispielsweise einem lebensmittelgeeigneten Metall gebildet.

Oberhalb des Krümmungsbereiches vom Wasserrohr 1 ist ein Transformator 5 angeordnet. Der Transformator 5 weist einen Transformatorkern 7 und eine Primärwicklung 6 auf, die mit dem Wasserrohr 1 gekoppelt sind.

Hierzu weist der Transformatorkern 7 zwei Öffnungen 10.1 und 10.2 auf, die jeweils eine an dem Durchmesser des Wasserrohres 1 angepasste Weite aufweisen, so dass das Wasserrohr 1 mit den Schenkeln 4.1 und 4.2 in die Öffnungen 10.1 und 10.2 des Transformatorkernes 7 einsteckbar sind. An dem Transformatorkern 7 ist eine Primärwicklung 6 gehalten, die mit mehreren Windungen um einen Mittelsteg 14 des Transformatorkernes 7 gewickelt ist. Die Windungen der Primärwindung 6 und die Schenkel 4.1 und 4.2 des Wasserrohres 1 durchdringen somit die Öffnungen 10.1 und 10.2 des Transformatorkernes 7 mit kurzem Abstand zueinander.

Wie aus der Fig. 2 hervorgeht, ist der Transfortnatorkern 7 mehrteilig als sogenannte EI-Kern ausgebildet. Der Transformatorkern besteht wegen der Hochfrequenz bevorzugt aus Ferrit oder einen Eisenpulver

Wie aus der Fig. 1 zu erkennen ist, ist die Primärwicklung 6 des Transformators 5 mit einer Energiequelle 8 gekoppelt. In diesem Ausführungsbeispiel ist die Energiequelle 8 als eine Netzeinspeisung dargestellt, wobei zwischen der Energiequelle 8 und der Primärwicklung 6 ein Hochfrequenzwandler 9 geschaltet ist. Dem Hochfrequenzwandler 9 ist eine Regeleinrichtung 12 zugeordnet, durch welche die Leistung des Hochfrequenzwandlers 9 steuerbar ist. Die Regeleinrichtung 12 ist mit einem Temperatursensor 13 verbunden, der im Bereich des Wasserauslaufes 3 an dem Wasserrohr 1 angeordnet ist. Die Regeleinrichtung 12 weist zudem eine Schnittstelle zu einer hier nicht dargestellten Steuereinheit auf, um ggf. Leistungsvorgaben unmittelbar den Hochfrequenzwandler 9 vorgeben zu können.

Das in dem Transformatorkern 7 eingesteckte Wasserrohr 1 wirkt als Sekundärwicklung des Transformators 5. Hierzu ist eine niederohmige Strombrücke 11 zwischen den Schenkeln 4.1 und 4.2 angeordnet, um einen Kurzschluss-Stromfluss in dem Wasserrohr 1 zu ermöglichen. Die Schenkel 4.1 und 4.2 des Wasserrohres 1 ragen hierzu aus dem Transformatorkern 7 heraus, so dass die Strombrücke 11 mit einem Abstand zu dem Transformatorkern 7 zwischen den Schenkeln 4.1 und 4.2 angeordnet ist. Damit lässt sich die nutzbare Heizstrecke in dem Wasserrohr 1 unabhängig von dem Transformator 5 wählen.

Um eine Menge fließendes Wasser zu erhitzen, wird der Transformator 5 aktiviert. Hierzu wird die Primärwicklung 6 mit der Energiequelle 8 verbunden. Durch den Hochfrequenzwandler 9 wird dabei die Netzeinspeisung von vorzugsweise 50 Hz oder 60 Hz in eine Betriebsspannung von 10 kHz bis 40 kHz gewandelt und dem Primärstromkreis des Transformators 5 zugeführt. Das durch die Primärspule erzeugte Magnetfeld in dem Transformatorkern 7 durchsetzt das Wasserrohr 1 und erzeugt in dem Wasserrohr einen hohen Strom, der aufgrund der Lastimpedanz des Wasserrohres zur Erwärmung des Wasserrohres führt. In diesem Zustand wird eine definierte Menge fließende Wasser über den Wasserzulauf 2 in das Wasserrohr 1 gegeben. Die Länge und der Durchmesser des Wasserrohres 1 sind dabei derart gewählt, dass bei einem vorgegebenen Durchfluss und Gegendruck sichergestellt ist, dass keine Dampfbildung eintritt. Weiterhin ist das Material und die Wandstärke des Wasserrohres derart ausgebildet, dass ein relativ hoher ohmscher Widerstand vorhanden ist, um mit wenig Strom eine hohe Wärmeleistung zu erreichen. Das Übersetzungsverhältnis des Transformators 5 wird vorzugsweise dabei so gewählt, dass die aus der Netzeinspeisung zur Verfügung gestellte Leistung übernommen werden kann, so dass zur Erwärmung des Wassers eine Leistung im Bereich von 1 kW bis 3 kW bei 230 Volt zur Verfügung steht. So lässt sich das fließende Wasser innerhalb des Wasserrohres bei Durchlauf vom Wasserzulauf 2 bis zum Wasserauslauf 3 auf eine entsprechende Wassertemperatur erhitzen.

Zur Einhaltung einer vorgegebenen Wassertemperatur ist in dem Bereich des Wasserauslaufs 3 an dem Wasserrohr 1 der Temperatursensor 13 angeordnet. Mit dem Temperatursensor 13 lässt sich unmittelbar die Wassertemperatur des erhitzen Wassers messen und der Regeleinrichtung 12 zuführen. Innerhalb der Regeleinrichtung 12 wird ein Ist-Soll-Vergleich durchgeführt und in Abhängigkeit von der Differenz ein Steuersignal dem Hochfrequenzwandler 9 zugeführt. Somit lässt sich eine gewünschte Wassertemperatur einstellen und einhalten.

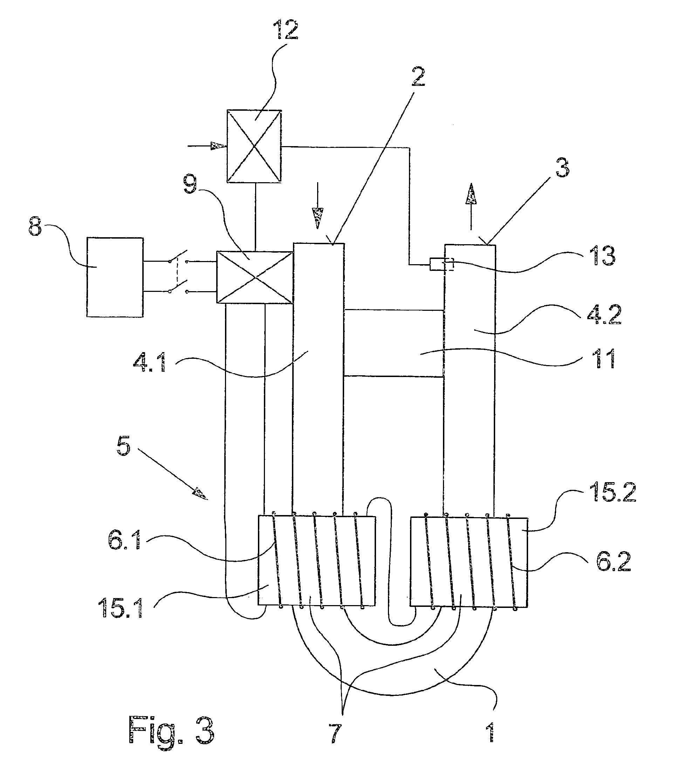

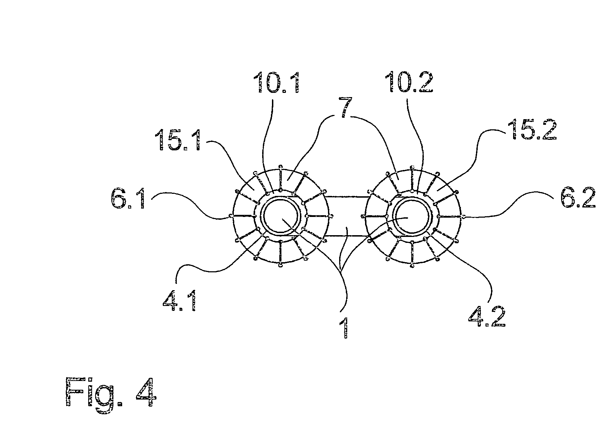

In Fig. 3 und 4 ist ein weiteres Ausführungsbeispiel der erfindungsgemäßen Vorrichtung schematisch in mehreren Ansichten dargestellt. Die Fig. 3 zeigt das Ausführungsbeispiel in einer Gesamtansicht und in Fig. 4 ist das Ausführungsbeispiel schematisch in einer Querschnittsansicht gezeigt. Insoweit kein ausdrücklicher Bezug zu einer Figuren gemacht ist, gilt die nachfolgende Beschreibung für beide Figuren.

Das Ausführungsbeispiel nach Fig. 3 und 4 ist im Wesentlichen identisch zu dem vorgenannten Ausführungsbeispiel nach Fig. 1 und 2, so dass an dieser Stelle nur die Unterschiede erläutert werden und ansonsten auf die vorgenannte Beschreibung Bezug genommen wird.

Bei dem in Fig. 3 und 4 dargestellten Ausführungsbeispiel weist der Transformator 5 zwei Ringkerne 15.1 und 15.2 auf, die jeweils eine Primärwicklung 6.1 und 6.2 tragen. Die Primärwicklungen 6.1 und 6.2 sind gleichmäßig über den Umfang der Ringkerne 15.1 und 15.2 verteilt. Im Innern der Ringkerne 15.1 und 15.2 bilden die Primärwicklungen 6.1 und 6.2 jeweils eine Öffnung 10.1 und 10.2 zur Aufnahme des Wasserrohres 1. So ist an jedem Schenkel 4.1 und 4.2 des Wasserrohres jeweils ein Ringkern 15.1 und 15.2 mit den Primärwicklungen 6.1 und 6.2 aufgesteckt.

Die Primärwicklungen 6.1 und 6.2 sind elektrisch miteinander verbunden, wobei die Primärwicklung 6.1 über einen Hochfrequenzwandler 9 mit einer Energiequelle 8 koppelbar ist.

Der Hochfrequenzwandler 9 ist in diesem Ausführungsbeispiel mit zumindest einer hier nicht näher dargestellten Teilkomponente unmittelbar im wärmeleitenden Kontakt mit dem Wasserrohr 1 verbunden. Hierzu ist der Hochfrequenzwandler 9 im Bereich des Wasserzulaufs 2 am freien Ende des Schenkels 4.1 angeordnet. Damit lässt sich die am Hochfrequenzwandler 9 anfallenden Wärmeverluste, wie sie beispielsweise bei Transistoren und Gleichrichtern auftreten, unmittelbar dem Wasserrohr 1 zuführen und zur Vorwärmung des zugeführten Frischwassers nutzen.

Die Funktion des in Fig. 3 und 4 dargestellten Ausführungsbeispiels der erfindungsgemäßen Vorrichtung ist identisch zu dem Ausführungsbeispiel nach Fig. 1 und 2, so dass an dieser Stelle keine weitere Erläuterung erfolgt und Bezug zu der vorgenannten Beschreibung genommen wird.

Bei dem in Fig. 3 und 4 dargestellten Ausführung ist eine besonders leistungsfähige Transformatorform gewählt. So ist allgemein bekannt, dass Ringkemtransformatoren aufgrund der geringen Streuung geringe Verluste aufweisen und somit hohe Wirkungsgrade in der Übertragungsenergie erreicht werden.

An dieser Stelle sei jedoch ausdrücklich erwähnt, dass der zur Erwärmung des Wasserrohres eingesetzte Transformator auch mit anderen Kernformen ausgeführt sein könnte. So sind auch UI-Kerne oder M-Kerne zur Aufnahme der Primärwicklung und zur Kopplung mit dem Wasserrohr möglich.

Die erfindungsgemäße Vorrichtung ist insbesondere geeignet, um kleine Mengen von fließendem Wasser in Kaffeeautomaten oder sonstigen Gertränkeautomaten zu erzeugen. Durch die direkte Erwärmung lässt sich die Energiezufuhr so schnell verändern, dass eine Temperaturanpassung von Becherfüllung zu Becherfüllung möglich ist. Zudem lassen sich selbst nach hohen Betriebszeiten beeinträchtigte Wasserrohre innerhalb der Getränkeautomaten ohne Demontage elektronischer Bauteile auf einfache Art und Weise auswechseln.

### Bezugszeichenliste

- 1: Wasserrohr
- 2: Wasserzulauf
- 3: Wasserauslauf
- 4.1,4.2: Schenkel
- 5: Transformator
- 6, 6.1, 6.2: Primärwicklung
- 7: Transformatorkern
- 8: Energiequelle
- 9: Hochfrequenzwandler
- 10.1, 10.2: Öffnung
- 11: Strombrücke
- 12: Regeleinrichtung
- 13: Temperatursensor
- 14: Mittelsteg
- 15.1, 15.2: Ringkerne

## Patentansprüche

1. Vorrichtung zum Erhitzen von fließendem Wasser insbesondere in Kaffeeautomaten mit einem Wasserrohr (1), dass an einem Ende einen Wasserzulauf (2) und an einem anderen Ende einen Wasserauslauf (3) aufweist und mit einem Transformator (5), der eine Primärwicklung (6) trägt und der durch einen Transformatorkern (7) mit dem als Sekundärwicklung wirkenden Wasserrohr (1) gekoppelt ist, wobei die Primärwicklung (6) mit einer Energiequelle (8) kuppelbar ist und das Wasserrohr (1) eine U-Form mit zwei im wesentlichen parallelen Schenkeln (4.1, 4.2) aufweist, **dadurch gekennzeichnet, dass** das Wasserrohr (1)über eine Einsteckverbindung mit dem Transformatorkern (7) verbunden ist.

2. Vorrichtung nach Anspruch 1,
**dadurch gekennzeichnet, dass**
der Transformatorkern (7) zumindest eine Öffnung (10.1) aufweist, durch welche das Wasserrohr (1) mit einem seiner Schenkeln (4.1) einsteckbar ist.

3. Vorrichtung nach Anspruch 2,
**dadurch gekennzeichnet, dass**
der Transformatorkern (7) quaderförmig mit zwei nebeneinander liegenden Öffnungen (10.1,10.2) ausgebildet ist, in welchen die Schenkel (4.1, 4.2) des Wasserrohres (1) gehalten sind.

4. Vorrichtung nach Anspruch 3,
**dadurch gekennzeichnet, dass**
die Primärwicklung (6) und das Wasserrohr (1) in den Öffnungen (10.1, 10.2) des Transformatorkerns (7) nebeneinander angeordnet sind.

5. Vorrichtung nach Anspruch 2,
**dadurch gekennzeichnet, dass**
der Transformatorkern (7) ringförmig ausgebildet ist und dass an den Schenkeln des Wasserrohres zwei Ringkerne (15.1,15.2) mit jeweils einer Primärwicklung (6,1, 6.2) angeordnet sind, wobei die Primärwicklungen (6.1, 6.2) elektrisch miteinander verbunden sind.

6. Vorrichtung nach Anspruch 5,
**dadurch gekennzeichnet, dass**
die Windungen der Primärwicklungen (6.1, 6.2) jeweils gleichmäßig über den Umfang der Ringkerne (15.1, 15.2) verteilt sind und im Innern der Ringkerne (15.1, 15.2) jeweils eine Einstecköffnung (10.1, 10.2) für die Schenkel (4.1, 4.2) des Wasserrohres (1) bilden.

7. Vorrichtung nach einem der Ansprüche 1 bis 6,
**dadurch gekennzeichnet, dass**
eine Strombrücke (11) zwischen den aus dem Transformatorkern (7) herausragenden Schenkeln (4.1, 4.2) des Wasserrohres (1) angeordnet ist.

8. Vorrichtung nach einem der Ansprüche 1 bis 7,
**dadurch gekennzeichnet, dass**
ein Hochfrequenzwandler (9) zwischen der Energiequelle (8) und der Primärwicklung (6) geschaltet ist, wobei die Energiequelle (8) durch eine Netzeinspeisung gebildet ist.

9. Vorrichtung nach Anspruch 8,
**dadurch gekennzeichnet, dass**
zumindest eine Teilkomponente des Hochfrequenzwandlers (9) im Bereich des Wasserzulaufs (2) im wärmeleitenden Kontakt zum Wasserrohr (1) angeordnet ist.

10. Vorrichtung nach Anspruch 8 oder 9,
**dadurch gekennzeichnet, dass**
eine Regeleinrichtung (12) zur Leistungssteuerung des Hochfrequenzwandlers (9) vorgesehen ist, die mit einem Temperatursensor (13) zur Erfassung einer Wassertemperatur verbunden ist.

11. Vorrichtung nach Anspruch 10,
**dadurch gekennzeichnet, dass**
der Temperatursensor (13) im Bereich des Wasserauslaufs (3) am Wasserrohr (1) angeordnet ist.

## Claims

1. Apparatus for heating flowing water, in particular in coffee machines, having a water pipe (1) which has a water inlet (2) at one end and a water outlet (3) at the other end, and having a transformer (5) which is fitted with a primary winding (6) and which is coupled to the water pipe (1), which acts as the secondary winding, by a transformer core (7), it being possible to couple the primary winding (6) to an energy source (8), and the water pipe (1) having a U-shape with two substantially parallel limbs (4.1, 4.2), **characterized in that** the water pipe (1) is connected to the transformer core (7) by means of a plug-in connection.

2. Apparatus according to Claim 1, **characterized in that** the transformer core (7) has at least one opening (10.1) through which the water pipe (1) can be inserted by way of one of its limbs (4.1).

3. Apparatus according to Claim 2, **characterized in that** the transformer core (7) is in the form of a cuboid with two openings (10.1, 10.2) which are situated next to one another and in which the limbs (4.1, 4.2) of the water pipe (1) are held.

4. Apparatus according to Claim 3, **characterized in that** the primary winding (6) and the water pipe (1) are arranged next to one another in the openings (10.1, 10.2) in the transformer core (7).

5. Apparatus according to Claim 2, **characterized in that** the transformer core (7) is in the form of a ring, and **in that** two toroidal cores (15.1, 15.2) with in each case one primary winding (6.1, 6.2) are arranged on the limbs of the water pipe, with the primary windings (6.1, 6.2) being electrically connected to one another.

6. Apparatus according to Claim 5, **characterized in that** the turns of the primary windings (6.1, 6.2) are in each case distributed uniformly over the circumference of the toroidal cores (15.1, 15.2) and in each case form an insertion opening (10.1, 10.2) for the limbs (4.1, 4.2) of the water pipe (1) in the interior of the toroidal cores (15.1, 15.2).

7. Apparatus according to one of Claims 1 to 6, **characterized in that** a current bridge (11) is arranged between the limbs (4.1, 4.2) of the water pipe (1), the said limbs projecting out of the transformer core (7).

8. Apparatus according to one of Claims 1 to 7, **characterized in that** a high-frequency converter (9) is connected between the energy source (8) and the primary winding (6), with the energy source (8) being formed by a power supply system feed means.

9. Apparatus according to Claim 8, **characterized in that** at least one subcomponent of the high-frequency converter (9) is arranged in the region of the water inlet (2) in thermally conductive contact with the water pipe (1).

10. Apparatus according to Claim 8 or 9, **characterized in that** a closed-loop control device (12) for controlling the power of the high-frequency converter (9) is provided, the said closed-loop control device being connected to a temperature sensor (13) for detecting a water temperature.

11. Apparatus according to Claim 10, **characterized in that** the temperature sensor (13) is arranged on the water pipe (1) in the region of the water outlet (3).

## Revendications

1. Dispositif de chauffage d'eau en écoulement, en particulier dans des automates à café, doté d'un tube à eau (1) qui présente à une extrémité une amenée d'eau (2) et à une autre extrémité une sortie d'eau (3) et d'un transformateur (5) qui porte un enroulement primaire (6) et qui est couplé par une âme de transformateur (7) à un tube à eau (1) qui agit comme enroulement secondaire, l'enroulement primaire (6) pouvant être raccordé à une source d'énergie (8) et le tube à eau (1) présentant la forme d'un U dont les branches (4.1, 4.2) sont essentiellement parallèles, **caractérisé en ce que**
le tube à eau (1) est relié à l'âme (7) du transformateur par un raccord enfichable.

2. Dispositif selon la revendication 1, **caractérisé en ce que** l'âme (7) du transformateur présente au moins une ouverture (10.1) par laquelle le tube à eau (1) peut être enfiché par une de ses branches (4.1).

3. Dispositif selon la revendication 2, **caractérisé en ce que** l'âme (7) du transformateur a la forme d'un parallélépipède et est configurée avec deux ouvertures (10.1, 10.2) situées l'une à côté de l'autre et dans lesquelles les branches (4.1, 4.2) du tube à eau (1) sont maintenues.

4. Dispositif selon la revendication 3, **caractérisé en ce que** l'enroulement primaire (6) et le tube à eau (1) sont disposés l'un à côté de l'autre dans les ouvertures (10.1, 10.2) de l'âme (7) du transformateur.

5. Dispositif selon la revendication 2, **caractérisé en ce que** l'âme (7) du transformateur a une configuration annulaire et **en ce que** deux âmes annulaires (15.1, 15.2) qui présentent chacune un enroulement primaire (6.1, 6.2) sont disposées sur les branches du tube à eau, les enroulements primaires (6.1, 6.2) étant reliés électriquement l'un à l'autre.

6. Dispositif selon la revendication 5, **caractérisé en ce que** les spires des enroulements primaires (6.1, 6.2) sont réparties uniformément à la périphérie des âmes annulaires (15.1, 15.2) et forment à l'intérieur des âmes annulaires (15.1, 15.2) une ouverture d'enfichage (10.1, 10.2) pour les branches (4.1, 4.2) du tube à eau (1).

7. Dispositif selon l'une des revendications 1 à 6, **caractérisé en ce qu'**un pont de courant (11) est disposé entre les branches (4.1, 4.2), qui débordent de l'âme (7) du transformateur, du tube à eau (1).

8. Dispositif selon l'une des revendications 1 à 7, **caractérisé en ce qu'**un convertisseur (9) de hautes fréquences est raccordé entre la source d'énergie (8) et l'enroulement primaire (6), la source d'énergie (8) étant formée par un raccordement au réseau.

9. Dispositif selon la revendication 8, **caractérisé en ce qu'**au moins un composant partiel du convertisseur (9) de hautes fréquences est disposé au niveau de l'amenée d'eau (2) en contact thermoconducteur avec le tube à eau (1).

10. Dispositif selon les revendications 8 ou 9, **caractérisé en ce qu'**un dispositif de régulation (12) qui commande la puissance du convertisseur (9) de hautes fréquences est prévu et est relié à une sonde de température (13) qui détecte une température de l'eau.

11. Dispositif selon la revendication 10, **caractérisé en ce que** la sonde de température (13) est disposée au niveau de la sortie d'eau (3) sur le tube à eau (1).
